# FASCICULE DE BREVET EUROPEEN

(11) **EP 2 483 073 B1**
(45) Date de publication et mention de la délivrance du brevet: **08.04.2015**
(21) Numéro de dépôt: 10752071.0
(22) Date de dépôt: 21.07.2010
(51) Int. Cl.: C04B 35/80, C04B 41/87, C04B 35/628, C04B 41/00, C04B 41/50

(54) **PIECE EN MATERIAU COMPOSITE A MATRICE CERAMIQUE ET PROCEDE POUR SA FABRICATION**
VERBUNDMATERIALTEIL MIT EINER KERAMIKMATRIX UND HERSTELLUNGSVERFAHREN DAFÜR
COMPOSITE MATERIAL PART HAVING A CERAMIC MATRIX, AND METHOD FOR MANUFACTURING SAME

(30) Priorité: 28.09.2009 FR 0956694
(43) Date de publication de la demande: 08.08.2012
(73) Titulaire: HERAKLES, 33185 Le Haillan (FR)
(72) Inventeur: THEBAULT, Jacques, F-33000 Bordeaux (FR); BERTRAND, Sébastien, F-33480 Moulis-en-Medoc (FR)
(74) Mandataire: Delumeau, François Guy
(86) Numéro de dépôt international: PCT/FR2010/051545
(87) Numéro de publication internationale: WO 2011/036358

(56) Documents cités:
- CN-A- 101 033 137
- NASLAIN R R: "The design of the fibre-matrix interfacial zone in ceramic matrix composites" COMPOSITES, IPC BUSINESS PRESS LTD. HAYWARDS HEATH, GB LNKD- DOI:10.1016/S1359-835X(97)00128-0, vol. 29, no. 9-10, 9 octobre 1998 (1998-10-09), pages 1145-1155, XP004146759 ISSN: 0010-4361
- MICHAUX ET AL: "Young's modulus, thermal expansion coefficient and fracture behavior of selected Si-B-C based carbides in the 20-1200<o>C temperature range as derived from the behavior of carbon fiber reinforced microcomposites" JOURNAL OF THE EUROPEAN CERAMIC SOCIETY, ELSEVIER SCIENCE PUBLISHERS, BARKING, ESSEX, GB LNKD- DOI:10.1016/J.JEURCERAMSOC.2006.12.006, vol. 27, no. 12, 1 janvier 2007 (2007-01-01), pages 3551-3560, XP022086580 ISSN: 0955-2219
- QUEMARD ET AL: "Self-healing mechanisms of a SiC fiber reinforced multi-layered ceramic matrix composite in high pressure steam environments" JOURNAL OF THE EUROPEAN CERAMIC SOCIETY, ELSEVIER SCIENCE PUBLISHERS, BARKING, ESSEX, GB LNKD- DOI:10.1016/J.JEURCERAMSOC.2006.06.007, vol. 27, no. 4, 6 décembre 2006 (2006-12-06), pages 2085-2094, XP005794792 ISSN: 0955-2219
- NASLAIN R ET AL: "Boron-bearing species in ceramic matrix composites for long-term aerospace applications" JOURNAL OF SOLID STATE CHEMISTRY, ORLANDO, FL, US LNKD- DOI:10.1016/J.JSSC.2003.03.005, vol. 177, no. 2, 1 février 2004 (2004-02-01), pages 449-456, XP002353467 ISSN: 0022-4596

## Description

### Arrière-plan de l'invention

L'invention concerne les pièces en matériau composite à matrice céramique, en particulier, mais non exclusivement, des pièces de moteurs aéronautiques ou de moteurs fusées.

Les matériaux composites à matrice céramique (CMC) sont formés d'un renfort fibreux, en fibres de carbone ou de céramique, densifié par une matrice céramique. Leurs propriétés mécaniques et tenue en température les rendent aptes à être utilisés pour des pièces de structure exposées en service à des températures élevées.

Toutefois, les matériaux CMC sont sujets à fissuration sous l'effet de contraintes thermomécaniques et ce souvent dès leur élaboration. Afin d'éviter la rupture de fibres du renfort fibreux par des fissures se propageant à travers la matrice, et la rapide détérioration des propriétés mécaniques qui en résulterait, il est bien connu d'interposer entre les fibres et la matrice une interphase de défragilisation. Une telle interphase est typiquement en un matériau de structure ou texture lamellaire qui, lorsqu'une fissure parvient à l'interphase, est capable de dissiper l'énergie de fissuration par une déliaison localisée de sorte que la fissure se trouve déviée au sein de l'interphase. Des matériaux constitutifs d'une interphase de défragilisation sont notamment le carbone pyrolytique PyC et le nitrure de bore BN qui présentent une structure lamellaire. On pourra se référer aux documents US 4 752 503 et US 5 026 604. D'autres matériaux peuvent être utilisés tels que par exemple du carbone dopé au bore BC et du carbosiliciure de titane Ti₃SiC₂. Il est connu aussi de réaliser une interphase multicouches en alternant des couches de PyC avec des couches en matériau pouvant former un verre. On pourra se référer au document NASLAIN R.R. "The design of the fibre-matrix interfacial zone in ceramic matrix composites", COMPOSITES, Composites Part A: Applied Science and Manufacturing, Vol. 29, N° 9-10, 9 octobre 1998 (1998-10-09), pages 1145-1155.

Dans le cas d'une utilisation en environnement corrosif (milieu oxydant ou humide), il est souhaitable d'éviter via la fissuration un accès aisé aux fibres du renfort ou à l'interphase fibres/matrice lorsque les fibres ou l'interphase sont en un matériau, tel que du carbone, sensible à un tel environnement corrosif.

A cet effet, il a été proposé de réaliser la matrice au moins partiellement par une phase céramique auto-cicatrisante en un matériau capable, en présence d'oxygène, de former un verre qui, par passage dans un état fluide aux températures d'utilisation du matériau CMC peut provoquer un colmatage ou une cicatrisation de fissures. Une phase céramique cicatrisante comprend par exemple les éléments Si, B et C pouvant former un verre borosilicaté. On pourra se référer par exemple au document US 5 965 266. Il est connu aussi de réaliser un matériau CMC en formant, sur une interphase PyC, une matrice séquencée avec des couches par exemple SiC, B₄C et Si-B-C, ces couches ayant des propriétés autocicatrisantes protégeant l'interphase PyC vis-à-vis de la fissuration. On pourra se référer au document QUEMARD ET AL.: "Self-healing mechanisms of a SiC fiber reinforced multi-layered ceramic matrix composite in high pressure steam environments", JOURNAL OF THE EUROPEAN CERAMIC SOCIETY, Vo. 27, N° 4, 6 décembre 2006 (2006-12-06), pages 2085-2094.

Il a aussi été proposé de dissiper de l'énergie de fissuration au sein de la matrice, avant que les fissures parviennent à l'interphase fibres/ matrice en formant la matrice de plusieurs couches en céramique avec interposition d'une interphase déviatrice de fissures entre deux couches de matrice voisines, les phases de matrice pouvant en outre être auto-cicatrisantes. On pourra se référer par exemple aux documents US 5 074 039 et US 6 068 930., ainsi qu'au document MICHAUX ET AL.: "Young's modulus, thermal expansion coefficient and fracture behavior of selected Si-B-C based carbides in the 20-1200°C température range as derived from the behavior of carbon fiber reinforced microcomposites", JOURNAL OF THE EUROPEAN CERAMIC SOCIETY, Vol. 27, N° 12, 1er janvier 2007 (2007-01-01), pages 3551-3560.

Toutefois, l'efficacité de phases de matrices auto-cicatrisantes est limitée à une plage de températures particulière. L'introduction d'interphases déviatrices de fissures entre des phases de matrice comme proposé dans l'état de la technique a quant à elle une efficacité limitée dans le temps, les déliaisons engendrées par la propagation des fissures dans les interphases pouvant conduire à terme à un écaillage du matériau CMC.

### Objet et résumé de l'invention

L'invention a donc pour but de fournir une pièce en matériau CMC présentant une durée de vie allongée pour utilisation à température élevée, jusqu'à au moins 1 000°C, et même jusqu'à au moins 1 200°C, dans un environnement corrosif.

Ce but est atteint grâce à une pièce en matériau CMC comprenant un renfort fibreux densifié par une matrice formée de plusieurs couches en céramique avec interposition d'une interphase matricielle déviatrice de fissures entre deux couches de matrice en céramique voisines, pièce dans laquelle l'interphase comprend :
une première phase en un matériau apte à favoriser la déviation d'une fissure qui parvient à l'interphase selon un premier mode de propagation en direction transversale à travers l'une des deux couches de matrice en céramique adjacentes à l'interphase, de sorte que la propagation de la fissure se poursuive selon un deuxième mode de propagation le long de l'interphase, et
une deuxième phase formée de plots discrets répartis dans l'interphase et apte à favoriser la déviation de la fissure qui se propage le long de l'interphase selon le deuxième mode de propagation, de sorte que la propagation de la fissure soit déviée et se poursuive selon le premier mode de propagation à travers l'autre couche de matrice céramique adjacente à l'interphase.

Dans un matériau CMC comprenant plusieurs couches de matrice avec une interphase interposée entre deux couches de matrice voisines, on distingue ici entre un premier mode de propagation de fissure (ou mode I) en direction transversale dans les couches de matrice et un deuxième mode de propagation longitudinal (mode II) le long d'une interphase, au sein de celle-ci ou au niveau d'une interface entre l'interphase et une couche de matrice adjacente.

L'invention est remarquable par la capacité de l'interphase d'assurer une déviation d'une fissure parvenant à l'interphase depuis une phase de matrice adjacente en passant du premier au deuxième mode de propagation, puis un rebranchement de la fissure vers l'autre phase de matrice adjacente en passant du deuxième mode de propagation à nouveau vers le premier mode de propagation. Ainsi, le risque d'écaillage est réduit en limitant l'étendue de déliaison au sein de la couche d'interphase et la tenue en environnement corrosif est prolongée en imposant aux fissures un trajet tortueux qui allonge le chemin par lequel le milieu environnant peut éventuellement accéder aux fibres du renfort fibreux ou à une interphase fibres/matrice.

Dans un mode de réalisation, les plots discrets constituant la deuxième phase réalisent des pontages localisés entre les deux couches de matrice en céramique. Les plots discrets constituent alors une deuxième phase liante en assurant une fonction mécanique de liaison entre les couches de matrice adjacentes à l'interphase. Les plots discrets peuvent être en céramique, par exemple en carbure de silicium SiC, en un autre carbure ou en nitrure structural, et peuvent être formés intégralement avec l'une des deux couches adjacentes de matrice en céramique.

De préférence, les plots discrets occupent une fraction surfacique de l'interphase comprise entre 20 % et 80 %.

Le matériau de la première phase de l'interphase peut être compris dans le groupe constitué par du carbone pyrolytique PyC, le nitrure de bore BN, le carbone dopé au bore BC et une phase MAX, notamment le carbosiliciure de titane Ti₃SiC₂.

De préférence, l'interphase a une épaisseur comprise entre 0,01 micron et 2 microns.

Selon un autre de ses aspects, l'invention a aussi pour objet de fournir un procédé permettant la fabrication d'une pièce en matériau CMC telle que définie ci-avant.

Ce but est atteint grâce à un procédé comprenant la réalisation d'une préforme fibreuse et la densification de la préforme fibreuse par une matrice formée de plusieurs couches en céramique avec interposition d'une interphase déviatrice de fissures entre deux couches de matrice en céramique voisines, procédé dans lequel l'interphase est réalisée avec :
une première phase en un matériau apte à favoriser la déviation d'une fissure qui parvient à l'interphase selon un premier mode de propagation en direction transversale à travers l'une des deux couches de matrice en céramique adjacentes à l'interphase, de sorte que la propagation de la fissure se poursuive selon un deuxième mode de propagation le long de l'interphase, et
une deuxième phase formée de plots discrets répartis dans l'interphase et aptes à favoriser la déviation de la fissure qui se propage le long de l'interphase selon le deuxième mode de propagation, de sorte que la propagation de la fissure se poursuive selon le premier mode de propagation à travers l'autre couche de matrice céramique adjacente à l'interphase.

Selon un premier mode particulier de mise en oeuvre du procédé, l'interphase est réalisée par co-dépôt de la première phase et de la deuxième phase par infiltration chimique en phase gazeuse.

Selon un deuxième mode particulier de mise en oeuvre du procédé, l'interphase est réalisée par dépôt par infiltration chimique en phase gazeuse sur une couche de matrice céramique d'une couche continue du matériau de la première phase, élimination localisée du matériau de la couche déposée pour former une couche discontinue et comblement des espaces ainsi ménagés par dépôt d'un matériau constituant la deuxième phase. Le comblement des espaces peut être réalisé par dépôt de matériau céramique lors de la formation d'une couche suivante de matrice céramique.

Selon un troisième mode particulier de mise en oeuvre du procédé, l'interphase est réalisée par dépôt discontinu sur une couche de matrice céramique d'un matériau constitutif ou précurseur du matériau de la première phase pour former des îlots espacés les uns des autres et comblement des espaces entre les îlots par dépôt d'un matériau constituant la deuxième phase. Le comblement des espaces peut être réalisé par dépôt de matériau céramique lors de la formation d'une couche suivante de matrice céramique.

Dans ce troisième mode de mise en oeuvre du procédé, on peut réaliser le dépôt discontinu par mise en suspension dans un véhicule liquide de particules du matériau constitutif ou précurseur du matériau de la première phase, imprégnation de la couche de matrice céramique par la suspension et élimination du véhicule liquide pour obtenir des particules dispersées à la surface de la couche de matrice céramique.

Lorsque le dépôt discontinu est formé par un matériau précurseur de celui de la première phase, la transformation du matériau précurseur peut être réalisée par réaction chimique avec une phase gazeuse, lors de la formation d'une couche suivante de matrice céramique.

Dans un quatrième mode de mise en oeuvre du procédé, l'interphase est réalisée par formation sur une couche de matrice céramique de nodules constituant les plots discrets de la deuxième phase et dépôt d'une couche d'un matériau constituant la première phase.

### Brève description des dessins

L'invention sera mieux comprise à la lecture de la description faite ci-après, à titre indicatif mais non limitatif en référence aux dessins annexés, sur lesquels :
- la figure 1 montre de façon très schématique la propagation d'une fissure dans la matrice d'un matériau CMC ayant plusieurs phases de matrice en céramique séparées par des interphases de défragilisation selon l'art antérieur ;
- la figure 2 montre de façon très schématique la propagation d'une fissure dans la matrice d'un matériau CMC selon l'invention ayant plusieurs phases de matrice céramique séparées par des interphases ;
- la figure 3 montre de façon très schématique un exemple d'une interphase selon l'invention ;
- la figure 4A montre de façon schématique un autre exemple d'une interphase selon l'invention et la figure 4B montre la propagation d'une fissure avec rebranchement dans une telle interphase ;
- les figures 5A à 5C montrent des étapes successives d'un mode de réalisation d'une interphase telle que celle de la figure 4A ;
- les figures 6A et 6B montrent des étapes successives d'un autre mode de réalisation d'une interphase telle que celle de la figure 4A ;
- les figures 7Aà 7C montrent des étapes successives d'encore un autre mode de réalisation d'une interphase selon l'invention ;
- la figure 8 est une vue au microscope électronique à balayage d'un codépôt C+SiC ;
- les figures 9 à 11 sont des vues au microscope électronique à balayage montrant des modes de propagation de fissures ;
- la figure 12 est une vue au microscope électronique à balayage montrant des nodules formés sur une surface d'une phase céramique ; et
- la figure 13 est une vue au microscope électronique à balayage montrant une interphase selon l'invention entre deux couches de céramique.

### Description de modes de réalisation de l'invention

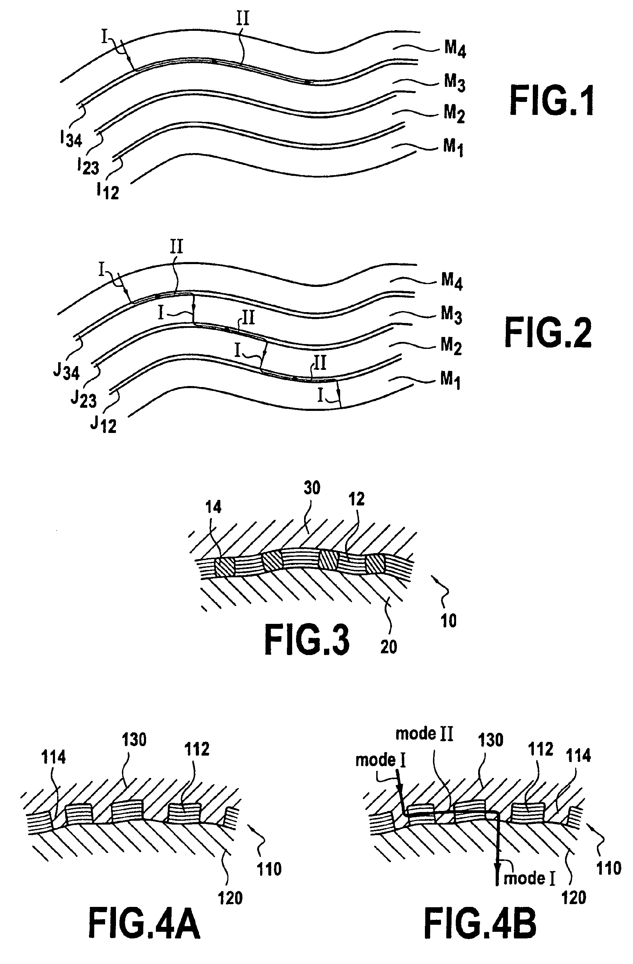

La figure 1 montre très schématiquement une partie d'un matériau CMC connu comprenant plusieurs couches ou phases de matrice céramique M₁, M₂, M₃, M₄ avec interposition d'une interphase de défragilisation I₁₂, I₂₃, I₃₄ entre deux couches de matrice voisines. Les interphases sont en un matériau déviateur de fissure, par exemple en PyC, BN, BC ou Ti₃SiC₂, de sorte qu'une fissure F parvenant à une interphase I₃₄ en se propageant transversalement dans une couche de matrice M₄ adjacente (mode I de propagation de fissure) est déviée pour continuer sa propagation le long de l'interphase I₃₄ par déliaison au sein de celle-ci ou à une interface entre l'interphase I₃₄ et une couche de matrice adjacente M₄ ou M₃ (mode II de propagation de fissure).

On évite ou retarde ainsi la propagation de la fissure à travers toute la matrice jusqu'à atteindre les fibres du matériau CMC. Toutefois, la déliaison correspondant à la propagation au mode II induit à l'évidence un risque d'écaillage du matériau CMC.

La figure 2 montre très schématiquement une partie d'un matériau CMC selon l'invention comprenant plusieurs couches ou phases de matrice céramique M₁, M₂, M₃, M₄ avec interposition d'une interphase mixte J₁₂, J₂₃, J₃₄ entre deux couches de matrice voisines. Chaque interphase mixte est formée par la juxtaposition de deux phases :
- une première phase déliante en un matériau déviateur de fissure favorisant la déviation en mode II d'une fissure parvenant en mode I à l'interphase, et
- une deuxième phase formée de plots discrets (non montrés sur la figure 2) favorisant le rebranchement en mode I d'une fissure se propageant en mode II le long de l'interphase.

Ainsi, une fissure F parvenant à une interphase en se propageant selon le mode I à travers une couche de matrice céramique adjacente à l'interphase est déviée pour se propager en mode II le long de l'interphase sur une distance limitée avant d'être à nouveau déviée pour poursuivre sa propagation en mode I à travers l'autre couche de matrice céramique adjacente à l'interphase.

Ainsi, le risque d'écaillage est éliminé ou au moins fortement réduit. En outre, le trajet tortueux des fissures rend moins aisé l'accès au coeur du matériau pour des espèces corrosives.

L'interphase mixte peut avoir une épaisseur relativement faible, par exemple comprise entre 0,01 micron et 2 microns.

Une interphase mixte offrant une double capacité de déviation de mode I en mode II et de rebranchement de mode II en mode I peut être réalisée de différentes façons.

La fabrication d'une pièce en matériau CMC avec plusieurs couches de matrices séparées par des interphases comprend de façon connue les étapes suivantes :
(a) réalisation d'une préforme fibreuse ayant une forme correspondant à celle de la pièce à fabriquer, la préforme étant en fibres de carbone ou de céramique,
(b) formation sur les fibres d'une couche d'interphase de défragilisation fibres/matrice, cette couche d'interphase pouvant éventuellement être formée avant la réalisation de la préforme fibreuse,
(c) formation d'une couche de matrice céramique,
(d) formation d'une interphase sur la couche de matrice céramique,
(e) formation d'une couche de matrice céramique, et
(f) répétition éventuelle des étapes (c) à (e) une ou plusieurs fois.

La préforme fibreuse peut par exemple être obtenue par mise en forme de textures fibreuses éventuellement en strates superposées, telles que des nappes de fils, des tissus bidimensionnels (2D) classiques ou des tissus tridimensionnels (3D) ou multicouches.

Dans le cas d'une pièce à réaliser de forme relativement complexe, une consolidation de la préforme fibreuse pour la figer dans la forme voulue peut être réalisée par voie liquide par imprégnation par une composition de consolidation contenant une résine précurseur de carbone ou céramique, puis réticulation et pyrolyse de la résine. Un processus de consolidation par voie liquide de préformes plus particulièrement destinées à la réalisation de pièces en CMC est décrit dans la demande de brevet français déposée sous le n° 0854937 par la demanderesse.

La couche d'interphase fibres/matrice, les interphases entre couches de matrice en céramique, de même que les couches de matrice en céramique peuvent être réalisées par infiltration chimique en phase gazeuse, ou CVI ("Chemical Vapor Infiltration"). A cet effet, la préforme fibreuse éventuellement consolidée est placée dans un four et une phase gazeuse réactionnelle contenant un ou plusieurs précurseurs de matériau à déposer est introduite dans le four. Les conditions notamment de pression et de température sont choisies pour permettre à la phase gazeuse de diffuser au sein de la préforme fibreuse et d'y former un dépôt souhaité par décomposition d'un constituant de la phase gazeuse ou réaction entre plusieurs constituants. La composition de la phase gazeuse réactionnelle et le cas échéant les conditions du processus CVI (température, pression, taux de précurseur dans la phase gazeuse, temps de séjour de la phase gazeuse dans le four,...) sont alors modifiées lors du passage du dépôt d'une couche de matrice en un matériau donné à une couche d'interphase en un autre matériau (ou inversement). On pourra se référer aux documents cités au début de la description s'agissant de la réalisation par CVI d'interphases de défragilisation ou de couches de matrice céramique.

Comme indiqué plus loin, l'interphase peut au moins en partie être réalisée par un procédé autre qu'un processus CVI.

La figure 3 montre très schématiquement un premier mode de réalisation d'une interphase mixte 10 conformément à l'invention entre deux couches de matrice céramique 20 et 30.

L'interphase 10 comprend une première phase déliante 12 en un matériau apte à favoriser une déviation de fissure vers le mode II par déliaison et une deuxième phase 14 formée de grains ou plots discrets aptes à favoriser un rebranchement de fissure du mode II au mode I, les grains ou plots de la phase 14 réalisant une liaison par des pontages localisés entre les couches de matrice céramique 20 et 30.

La phase déliante 12 peut être par exemple en carbone pyrolytique PyC, en nitrure de bore BN, en carbone dopé au bore BC (avec entre 5% at. et 20% at. de B, le reste étant C) ou en une phase MAX telle que Ti₃SiC₂. Les grains ou plots formant la phase liante 14 peuvent être en céramique, par exemple en carbure de silicium SiC, en un autre carbure ou en un nitrure structuraux.

L'interphase 10 peut être obtenue par co-dépôt des phases 12 et 14 sur la couche de matrice céramique 20. Par exemple, un co-dépôt par CVI d'une phase 12 en PyC et d'une phase 14 en SiC peut être réalisé en utilisant une phase gazeuse réactionnelle composée de methyltrichlorosilane (MTS) et d'hydrogène H₂ avec un rapport α très faible entre débit de H2 et débit de MTS, par exemple α < 1.

Après formation de l'interphase 10, la couche céramique suivante 30 est formée. On réalise ainsi successivement les couches de matrice et les interphases.

Les figures 4A-4B montrent très schématiquement un autre mode de réalisation d'une interphase mixte 110 conformément à l'invention entre deux couches de matrice céramique 120 et 130.

L'interphase comprend une première phase déliante 112 en matériau apte à dévier une fissure vers le mode II et une deuxième phase liante 114 formée de plots discrets qui réalisent une liaison par des pontages localisés entre les couches de matrice céramique en étant formés avec l'une des couches de matrice.

La première phase déliante 112 peut être par exemple en PyC, BN, BC ou phase MAX telle que Ti₃SiC₂.

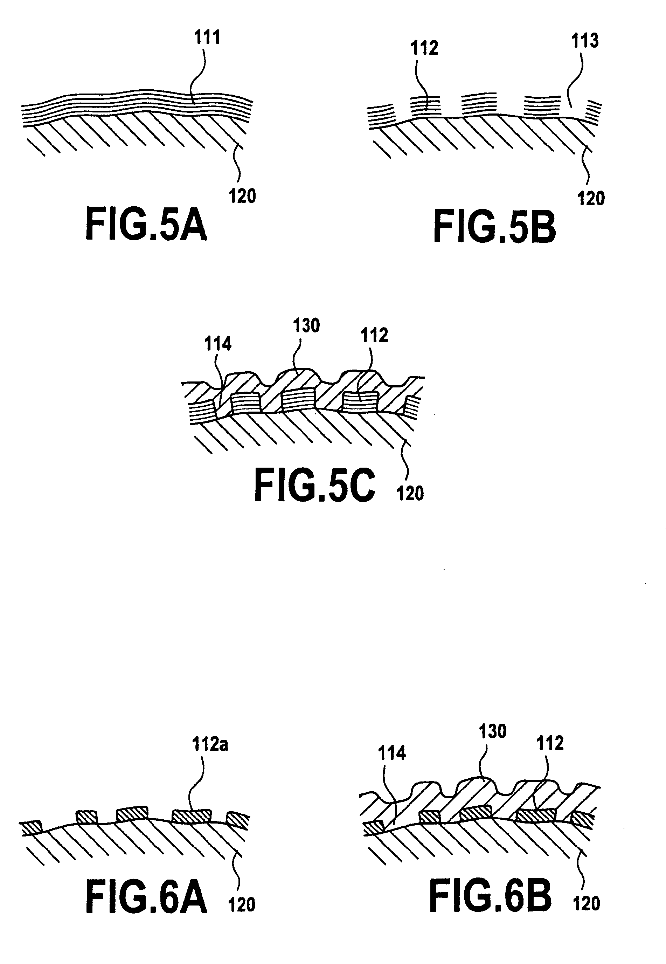

Un mode de formation de l'interphase 110 est montré par les figures 5A à 5C.

Après réalisation de la couche de matrice 120, une couche continue 111 de matériau de phase déliante est formée par CVI sur la couche de matrice 120 (figure 5A).

La couche 111 est éliminée localement pour laisser subsister des îlots 112 séparés les uns des autres (figure 5B). L'élimination locale de la couche 111 peut être réalisée par gravage par attaque chimique ou physique.

Ensuite, le matériau céramique de la couche 130 est déposé par CVI occupant notamment les espaces entre les îlots 112 pour former les plots 114.

Un autre mode de formation de l'interphase 110 est montré par les figures 6A et 6B.

Après réalisation de la couche de matrice céramique 120, des îlots 112a en un matériau de phase déliante ou en un matériau précurseur du matériau de phase déliante sont formés sur la couche 120 (figure 6A). Les îlots 112a sont séparés les uns des autres.

Pour la formation des îlots 112a, on peut procéder de la façon suivante :
- préparation d'une suspension dans un véhicule liquide de particules du matériau de la phase déliante ou en un matériau précurseur du matériau de la phase déliante,
- imprégnation de la couche de matrice 120 par la suspension, et
- élimination du véhicule liquide pour laisser des particules isolées dispersées à la surface de la couche de matrice 120, tout en étant ancrées dans la porosité de surface de la couche 120 qui présente toujours une porosité résiduelle, les particules ayant une dimension choisie pour ne pas excéder l'épaisseur de l'interphase à réaliser.

Les îlots 112a peuvent former la phase déliante 112 soit directement, soit par réaction chimique avec une phase gazeuse amenée avant le dépôt de la couche suivante de matrice 130 ou par réaction chimique lors du dépôt de cette couche de matrice.

Ainsi, on pourra former les îlots 112a par du titane en tant que précurseur qui donne des plots 112 en Ti₃SiC₂ par réaction avec une phase gazeuse précurseur de SiC utilisée pour former la couche de matrice 130.

Le matériau céramique de la couche de matrice 130 est déposé par CVI occupant notamment les espaces entre les îlots 112a pour former les plots 114 (figure 6B).

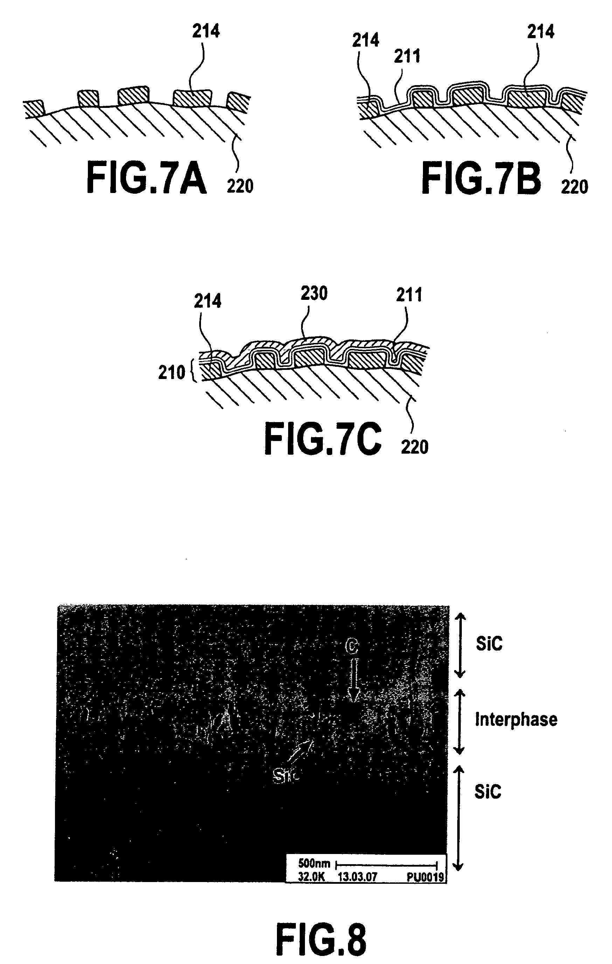

Les figures 7A à 7C montrent de façon très schématique encore un autre mode de réalisation d'une interphase mixte conformément à l'invention.

Des nodules 214 destinés à former les plots discrets de la deuxième phase de l'interphase à réaliser sont déposés sur une couche de matrice céramique 220 (figure 7A).

Les nodules 214 peuvent être obtenus par dépôt chimique en phase gazeuse ou CVD ("Chemical Vapor Deposition") en choisissant des conditions de dépôt donnant un dépôt discontinu formé de nodules discrets et non une couche continue. Ainsi, par exemple, des nodules de SiC ou de SiC+Si peuvent être obtenus en utilisant une phase gazeuse comprenant un mélange de MTS, H₂ et acide chlorhydrique HCl avec un rapport α entre les débits de H₂ et MTS et un rapport δ entre les débits de HCl et MTS sélectionnés à cet effet, α étant de préférence compris entre 5 et 25 et δ étant de préférence compris entre 0,05 et 2.

Une couche continue 211 de phase déliante est ensuite formée par CVI sur la phase de matrice 220 et les nodules 214 (figure 7B). La phase déliante peut être par exemple en PyC, BN, BC ou phase MAX telle que Ti₃SiC₂. On obtient ainsi l'interphase matricielle 210 comprenant les nodules 214 et la couche 211.

La couche de matrice 230 suivante est ensuite formée sur la phase déliante 211.

Les phases de matrice 220 et 230 étant avantageusement formées par CVI, la réalisation des nodules 214 par CVD permet d'enchaîner les étapes de formation des phases de matrice et de l'interphase dans un four en modifiant la composition de la phase gazeuse réactionnelle.

Le dépôt sur la couche de matrice 220 de particules solides formant la deuxième phase de l'interphase pourrait toutefois être réalisé par formation d'une suspension de particules solides de faibles dimensions en céramique dans un véhicule liquide, par exemple en SiC, imprégnation de la couche de matrice 220 par la suspension et élimination du véhicule liquide pour laisser les particules de céramique dispersées à la surface de la couche de matrice et ancrées dans la porosité de surface.

Des exemples de réalisation d'interphases seront maintenant décrits. Dans ces exemples, les interphases ont été réalisées sur des substrats monolithiques et non sur des substrats composites à renfort fibreux, le but étant de montrer la faisabilité et les effets des interphases.

### Exemple 1

On a réalisé sur un substrat en silicium un ensemble : SiC/Interphase SiC+PyC/SiC/Interphase SiC+PyC/SiC, dans lequel :
- les couches SiC sont des couches stoechiométriques obtenues par CVI de façon bien connue à partir d'une phase gazeuse MTS+H₂ à une température d'environ 1000°C et sous une pression d'environ 5 kPa, le rapport α entre le débit de H2 et le débit de MTS étant d'environ 6,
- les interphases SiC+PyC sont obtenues par CVI à partir d'une phase gazeuse MTS+H₂ donnant une première phase déliante PyC à structure lamellaire et une deuxième phase formée par des cristallites de PyC, les conditions étant les mêmes que celles conduisant à l'obtention de SiC stoechiométrique à l'exception du rapport α qui est choisi inférieur à 1.

En choisissant, pour la formation de chaque interphase, un rapport α égal à 0,1 environ et une durée de 1,5 min, on a obtenu une interphase d'épaisseur environ égale à 30 nm contenant 80% at. de PyC, le reste étant formé par des cristallites de SiC.

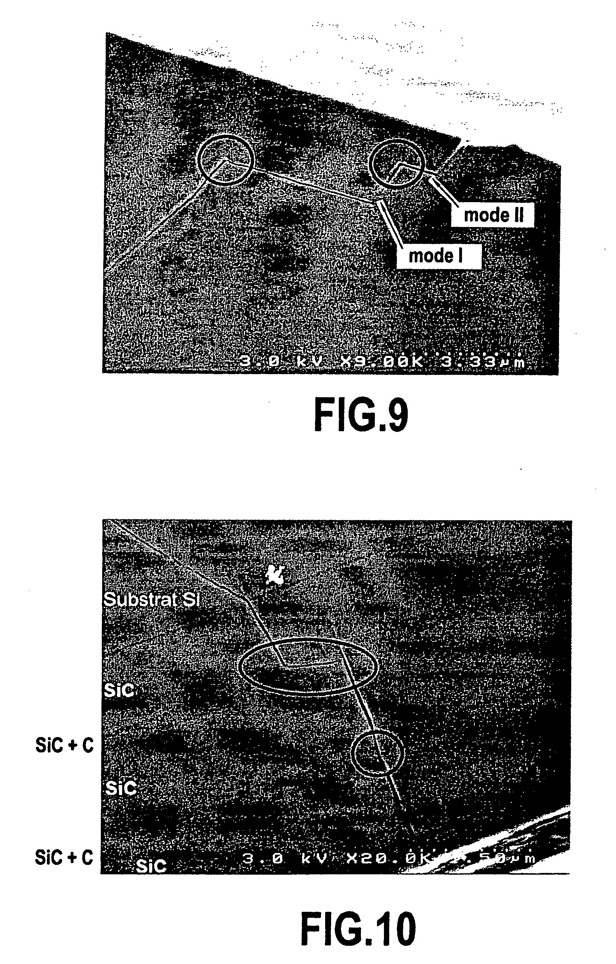

La figure 8 montre une interphase obtenue tandis que la figure 9 montre le trajet d'une fissure provoquée par indentation sous charge. Sur la figure 9, les cercles indiquent les zones de rebranchement de la fissure (transitions du mode II au mode I).

### Exemple 2

On a procédé comme dans l'exemple 1 mais, lors de la réalisation de chaque interphase, avec un rapport α égal environ à 0,25 et une durée de 5 min. On a obtenu des interphases SiC+PyC d'épaisseur environ égale à 0,3 micron contenant 70% at. de PyC, le reste étant formé par des cristallites de SiC.

La figure 10 montre le trajet d'une fissure provoquée par indentation sous charge. On constate une absence de transition du mode I en mode II dans la deuxième interphase, une telle transition avec rebranchement en mode I se produisant dans la première interphase.

### Exemple 3

On a procédé comme dans l'exemple 1 mais, lors de la réalisation de chaque interphase, avec un rapport α égale à environ 0,5 et une durée de 5 min. On a obtenu des interphases SiC+PyC d'épaisseur environ égale à 0,2 micron contenant 60% at. de PyC, le reste étant formé par des cristallites de SiC.

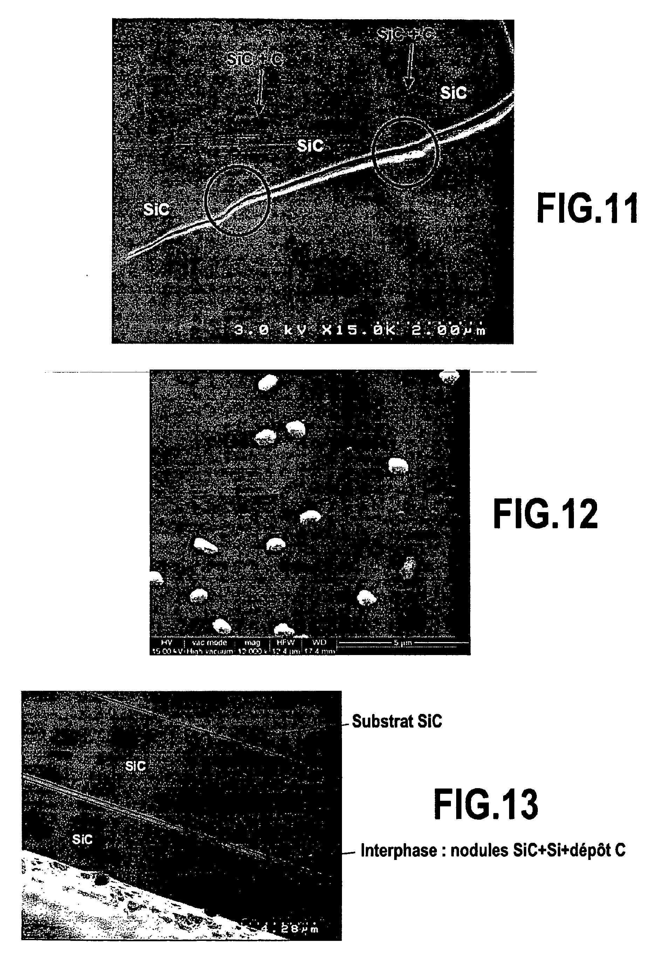

La figure 11 montre le trajet d'une fissure provoquée par indentation sous charge. On constate une absence de transition du mode I au mode II dans les deux interphases, traduisant la présence insuffisante d'une phase déliante.

### Exemple 4

Des nodules SiC+Si (SiC non stoechiométrique fortement enrichi en Si) ont été formés par CVD sur un substrat SiC en utilisant une phase gazeuse MTS+H₂+HCl, à une température d'environ 1000°C, sous une pression d'environ 5 kPa et avec des rapports de débits α et δ égaux respectivement à environ 8 et environ 0,5, la durée de dépôt étant d'environ 30 min.

La figure 12 montre les nodules SiC+Si obtenus. Ils présentent un diamètre moyen d'environ 300 nm et une hauteur moyenne d'environ 100 nm et la distance moyenne entre nodules est d'environ 5 microns.

### Exemple 5

On a réalisé sur un substrat en silicium un ensemble : SiC/Interphase (SiC+Si)+PyC/SiC, dans lequel :
- les couches SiC sont des couches stoechiométriques de SiC obtenues par CVI comme dans l'exemple 1,
- l'interphase (SiC+Si)+PyC est obtenue par dépôt par CVD de nodules discrets SiC+Si puis par dépôt par CVI d'une couche PyC continue.

Le dépôt par CVD des nodules SiC+Si (SiC non stoechiométrique fortement enrichi en Si) a été obtenu en utilisant une phase gazeuse MTS+H2+HCl, à une température d'environ 1000°C, sous une pression d'environ 5 kPa et avec des rapports de débits α et δ égaux respectivement à environ 20 et environ 0,5, la durée de dépôt étant d'environ 30 min.

Le dépôt de la couche de PyC continue a été obtenu en utilisant une phase gazeuse contenant du propane, à une température d'environ 1000°C, sous une pression d'environ 5 kPa, la durée du dépôt étant d'environ 2,5 min.

La figure 13 montre l'interphase obtenue d'une épaisseur moyenne environ égale à 50 nm.

## Revendications

1. Pièce en matériau composite à matrice céramique comprenant un renfort fibreux densifié par une matrice formée de plusieurs couches en céramique avec interposition d'une interphase matricielle déviatrice de fissures entre deux couches de matrice en céramique voisines, **caractérisée en ce que** l'interphase (10 ; 110 ; 210) comprend :
une première phase (12 ; 112 ; 211) en un matériau apte à favoriser la déviation d'une fissure qui parvient à l'interphase selon un premier mode de propagation en direction transversale à travers l'une des deux couches de matrice en céramique adjacentes à l'interphase, de sorte que la propagation de la fissure se poursuive selon un deuxième mode de propagation le long de l'interphase, et
une deuxième phase formée de plots discrets (14 ; 114 ; 214) répartis dans l'interphase et apte à favoriser la déviation de la fissure qui se propage le long de l'interphase selon le deuxième mode de propagation, de sorte que la propagation de la fissure soit déviée et se poursuive selon le premier mode de propagation à travers l'autre couche de matrice céramique adjacente à l'interphase.

2. Pièce selon la revendication 1, **caractérisée en ce que** les plots discrets constituant la deuxième phase réalisent des pontages localisés entre les deux couches de matrice en céramique.

3. Pièce selon la revendication 2, **caractérisée en ce que** les plots discrets sont en céramique.

4. Pièce selon la revendication 3, **caractérisée en ce que** les plots discrets sont formés intégralement avec l'une des deux couches adjacentes de matrice en céramique.

5. Pièce selon l'une quelconque des revendications 1 à 4, **caractérisée en ce que** les plots discrets occupent une fraction surfacique de l'interphase comprise entre 20% et 80%.

6. Pièce selon l'une quelconque des revendications 1 à 5, **caractérisée en ce que** le matériau de la première phase de l'interphase est choisi dans le groupe constitué par du carbone pyrolytique PyC, le nitrure de bore BN, le carbone dopé au bore BC et une phase MAX, notamment le carbosiliciure de titane Ti₃SiC₂.

7. Pièce selon l'une quelconque des revendications 1 à 6, **caractérisée en ce que** l'interphase a une épaisseur comprise entre 0,01 micron et 2 microns.

8. Procédé de fabrication d'une pièce en matériau composite à matrice céramique, comprenant la réalisation d'une préforme fibreuse et la densification de la préforme fibreuse par une matrice formée de plusieurs couches en céramique avec interposition d'une interphase déviatrice de fissures entre deux couches de matrice en céramique voisines, **caractérisé en ce que** l'interphase est réalisée avec :
une première phase en un matériau apte à favoriser la déviation d'une fissure qui parvient à l'interphase selon un premier mode de propagation en direction transversale à travers l'une des deux couches de matrice en céramique adjacentes à l'interphase, de sorte que la propagation de la fissure se poursuive selon un deuxième mode de propagation le long de l'interphase, et
une deuxième phase formée de plots discrets répartis dans l'interphase et aptes à favoriser la déviation de la fissure qui se propage le long de l'interphase selon le deuxième mode de propagation, de sorte que la propagation de la fissure se poursuive selon le premier mode de propagation à travers l'autre couche de matrice céramique adjacente à l'interphase.

9. Procédé selon la revendication 8, **caractérisé en ce que** l'interphase est réalisée par co-dépôt de la première phase et de la deuxième phase par infiltration chimique en phase gazeuse.

10. Procédé selon la revendication 8, **caractérisé en ce que** l'interphase est réalisée par dépôt par infiltration chimique en phase gazeuse sur une couche de matrice céramique d'une couche continue du matériau de la première phase, élimination localisée du matériau de la couche déposée pour former une couche discontinue et comblement des espaces ainsi ménagés par dépôt d'un matériau constituant la deuxième phase.

11. Procédé selon la revendication 8, **caractérisé en ce que** l'interphase est réalisée par dépôt discontinu sur une couche de matrice céramique d'un matériau constitutif ou précurseur du matériau de la première phase pour former des îlots espacés les uns des autres et comblement des espaces entre les îlots par dépôt d'un matériau constituant la deuxième phase.

12. Procédé selon la revendication 11, **caractérisé en ce que** le dépôt discontinu est réalisé par mise en suspension dans un véhicule liquide de particules du matériau constitutif ou précurseur du matériau de la première phase, imprégnation de la couche de matrice céramique par la suspension et élimination du véhicule liquide pour obtenir des particules dispersées à la surface de la couche de matrice céramique.

13. Procédé selon l'une quelconque des revendications 10 et 11, **caractérisé en ce que** le dépôt discontinu est formé par un matériau précurseur de celui de la première phase, et la transformation du matériau précurseur est réalisée par réaction chimique avec une phase gazeuse lors de la formation de couche suivante de matrice céramique.

14. Procédé selon l'une quelconque des revendications 10 à 13, **caractérisé en ce que** le comblement des espaces est réalisé par dépôt de matériau céramique lors de la formation d'une couche de matrice céramique.

15. Procédé selon la revendication 8, **caractérisé en ce que** l'interphase est réalisée par formation sur une couche de matrice céramique de nodules constituant les plots discrets de la deuxième phase et dépôt d'une couche d'un matériau constituant la première phase.

## Patentansprüche

1. Teil aus Keramikmatrix-Verbundwerkstoff mit einer Faserverstärkung, die durch eine Matrix, welche von mehreren Keramikschichten unter Einfügen einer rissablenkenden Matrixinterphase zwischen zwei benachbarten Keramikmatrixschichten gebildet ist, verdichtet ist, **dadurch gekennzeichnet, dass** die Interphase (10; 110; 210) umfasst:
eine erste Phase (12; 112; 211) aus einem Material, das geeignet ist, die Ablenkung eines Risses zu begünstigen, der entsprechend einer ersten Ausbreitungsform in Querrichtung quer durch eine der zu der Interphase benachbarten beiden Keramikmatrixschichten zu der Interphase gelangt, so dass die Ausbreitung des Risses sich entsprechend einer zweiten Ausbreitungsform entlang der Interphase fortsetzt, und
eine zweite Phase, die von in der Interphase verteilten einzelnen Kontakten (14; 114; 214) gebildet und geeignet ist, die Ablenkung des Risses zu begünstigen, der sich entlang der Interphase entsprechend der zweiten Ausbreitungsform ausbreitet, so dass die Ausbreitung des Risses abgelenkt wird und sich entsprechend der ersten Ausbreitungsform quer durch die zu der Interphase benachbarte andere Keramikmatrixschicht fortsetzt.

2. Teil nach Anspruch 1, **dadurch gekennzeichnet, dass** die die zweite Phase bildenden einzelnen Kontakte stellenweise Überbrückungen zwischen den beiden Keramikmatrixschichten herstellen.

3. Teil nach Anspruch 2, **dadurch gekennzeichnet, dass** die einzelnen Kontakte aus Keramik bestehen.

4. Teil nach Anspruch 3, **dadurch gekennzeichnet, dass** die einzelnen Kontakte mit einer der beiden benachbarten Keramikmatrixschichten integral ausgebildet sind.

5. Teil nach einem der Ansprüche 1 bis 4, **dadurch gekennzeichnet, dass** die einzelnen Kontakte einen Flächenanteil der Interphase im Bereich zwischen 20 % und 80 % einnehmen.

6. Teil nach einem der Ansprüche 1 bis 5, **dadurch gekennzeichnet, dass** das Material der ersten Phase der Interphase aus der Gruppe bestehend aus pyrolytischem Kohlenstoff PyC, Bornitrid BN, bordotiertem Kohlenstoff BC und einer MAX-Phase, insbesondere Titancarbosilicid Ti₃SiC₂, ausgewählt ist.

7. Teil nach einem der Ansprüche 1 bis 6, **dadurch gekennzeichnet, dass** die Interphase eine Dicke im Bereich zwischen 0,01 Mikrometer und 2 Mikrometern hat.

8. Verfahren zur Herstellung eines Teils aus Keramikmatrix-Verbundwerkstoff, umfassend die Herstellung eines Faservorformlings und die Verdichtung des Faservorformlings durch eine Matrix, die von mehreren Keramikschichten unter Einfügen einer rissablenkenden Interphase zwischen zwei benachbarten Keramikmatrixschichten gebildet ist, **dadurch gekennzeichnet, dass** die Interphase ausgebildet ist mit:
einer ersten Phase aus einem Material, das geeignet ist, die Ablenkung eines Risses zu begünstigen, der entsprechend einer ersten Ausbreitungsform in Querrichtung quer durch eine der zu der Interphase benachbarten beiden Keramikmatrixschichten zu der Interphase gelangt, so dass die Ausbreitung des Risses sich entsprechend einer zweiten Ausbreitungsform entlang der Interphase fortsetzt, und
einer zweiten Phase, die von einzelnen Kontakten gebildet ist, welche in der Interphase verteilt und geeignet sind, die Ablenkung des Risses zu begünstigen, der sich entlang der Interphase entsprechend der zweiten Ausbreitungsform ausbreitet, so dass die Ausbreitung des Risses sich entsprechend der ersten Ausbreitungsform quer durch die zu der Interphase benachbarte andere Keramikmatrixschicht fortsetzt.

9. Verfahren nach Anspruch 8, **dadurch gekennzeichnet, dass** die Interphase durch gemeinsames Abscheiden der ersten Phase und der zweiten Phase mittels chemischer Gasphaseninfiltration hergestellt wird.

10. Verfahren nach Anspruch 8, **dadurch gekennzeichnet, dass** die Interphase durch Abscheiden mittels chemischer Gasphaseninfiltration, auf einer Keramikmatrixschicht, einer durchgehenden Schicht aus dem Material der ersten Phase, stellenweises Entfernen des Materials der abgeschiedenen Schicht, um eine unterbrochene Schicht zu bilden, sowie Auffüllen der so ausgebildeten Zwischenräume durch Abscheiden eines die zweite Phase bildenden Materials hergestellt wird.

11. Verfahren nach Anspruch 8, **dadurch gekennzeichnet, dass** die Interphase durch diskontinuierliches Abscheiden, auf einer Keramikmatrixschicht, eines die erste Phase bildenden Materials oder Vorläufers des Materials der ersten Phase, um voneinander beabstandete Inselchen zu bilden, sowie Auffüllen der Zwischenräume zwischen den Inselchen durch Abscheiden eines die zweite Phase bildenden Materials hergestellt wird.

12. Verfahren nach Anspruch 11, **dadurch gekennzeichnet, dass** das diskontinuierliche Abscheiden durch Suspendieren, in einem flüssigen Vehikel, von Partikeln des die erste Phase bildenden Materials oder Vorläufers des Materials der ersten Phase, Imprägnieren der Keramikmatrixschicht mit der Suspension sowie Entfernen des flüssigen Vehikels, um auf der Oberfläche der Keramikmatrixschicht fein verteilte Partikel zu erhalten, durchgeführt wird.

13. Verfahren nach einem der Ansprüche 10 und 11, **dadurch gekennzeichnet, dass** die diskontinuierliche Abscheidung durch ein Vorläufermaterial von dem der ersten Phase gebildet ist und die Umwandlung des Vorläufermaterials durch chemische Reaktion mit einer Gasphase bei der Bildung einer folgenden Keramikmatrixschicht vollzogen wird.

14. Verfahren nach einem der Ansprüche 10 bis 13, **dadurch gekennzeichnet, dass** das Auffüllen der Zwischenräume durch Abscheiden eines Keramikmaterials bei der Bildung einer Keramikmatrixschicht vollzogen wird.

15. Verfahren nach Anspruch 8, **dadurch gekennzeichnet, dass** die Interphase durch Ausbilden, auf einer Keramikmatrixschicht, von die einzelnen Kontakte der zweiten Phase bildenden Knötchen sowie Abscheiden einer Schicht aus einem die erste Phase bildenden Material hergestellt wird.

## Claims

1. A composite material part having a ceramic matrix and comprising a fibrous reinforcement which is densified by a matrix consisting of a plurality of ceramic layers having a crack-diverting matrix interphase positioned between two adjacent ceramic matrix layers, **characterized in that** the interphase (10; 110; 210) includes:
a first phase (12; 112; 211) made of a material capable of promoting the diversion of a crack reaching the interphase according to a first propagation mode in the transverse direction through one of the two ceramic matrix layers adjacent to the interphase, such that the propagation of the crack continues according to a second propagation mode along the interphase, and
a second phase consisting of discrete contact pads (14; 114; 214) that are distributed within the interphase and capable of promoting the diversion of the crack that propagates along the interphase according to the second propagation mode, such that the propagation of the crack is diverted and continues according to the first propagation mode through the other ceramic matrix layer that is adjacent to the interphase.

2. A part according to claim 1, **characterized in that** the discrete contact pads making up the second phase perform localized bridging between the two ceramic matrix layers.

3. A part according to claim 2, **characterized in that** the discrete contact pads are made from ceramic.

4. A part according to claim 3, **characterized in that** the discrete contact pads are formed integrally with one of the two adjacent ceramic matrix layers.

5. A part according to any one of claims 1 to 4, **characterized in that** the discrete contact pads occupy a surface fraction of the interphase of between 20% and 80%.

6. A part according to any one of claims 1 to 5, **characterized in that** the material of the first phase of the interphase is selected in the group made up of pyrolytic carbon PyC, boron nitride BN, boron-doped carbon BC, and a MAX phase, in particular titanium silicocarbide Ti₃SiC₂.

7. A part according to any one of claims 1 to 6, **characterized in that** the interphase has a thickness of between 0.01 micron and 2 microns.

8. A method for producing a composite material part having a ceramic matrix, comprising the production of a fibrous preform and the densification of the fibrous preform by a matrix made up of several ceramic layers having a crack-deviating interphase placed between two adjacent ceramic matrix layers, **characterized in that** the interphase is made with:
a first phase made of a material capable of promoting the diversion of a crack reaching the interphase according to a first propagation mode in the transverse direction through one of the two ceramic matrix layers adjacent to the interphase, such that the propagation of the crack continues according to a second propagation mode along the interphase, and
a second phase consisting of discrete contact pads that are distributed within the interphase and capable of promoting the diversion of the crack that propagates along the interphase according to the second propagation mode, such that the propagation of the crack is diverted and continues according to the first propagation mode through the other ceramic matrix layer that is adjacent to the interphase.

9. A method according to claim 8, **characterized in that** the interphase is made by co-deposition of the first phase and the second phase by chemical vapor infiltration.

10. A method according to claim 8, **characterized in that** the interphase is made by chemical vapor infiltration deposition on a ceramic matrix layer of a continuous layer of the material of the first phase, localized elimination of the material of the deposited layer to form a discontinuous layer, and filling in the spaces thus formed by depositing a material making up the second phase.

11. A method according to claim 8, **characterized in that** the interphase is made by discontinuous deposition on a ceramic matrix layer of a component material or precursor of the material of the first phase to form patches spaced apart from one another and filling in spaces between the patches by depositing a material making up the second phase.

12. A method according to claim 11, **characterized in that** the discontinuous deposition is carried out by suspending, in a liquid carrier, particles of the component material or precursor of the material of the first phase; impregnating the ceramic matrix layer with the suspension; and eliminating the liquid carrier to obtain particles dispersed on the surface of the ceramic matrix layer.

13. A method according to any one of claims 10 and 11, **characterized in that** the discontinuous deposition is formed by a precursor material of the material of the first phase, and the transformation of the precursor material is done by chemical reaction with a gas phase, during the formation of a subsequent ceramic matrix layer.

14. A method according to any one of claims 10 to 13, **characterized in that** the filling in of the spaces is done by ceramic material deposition during the formation of a ceramic matrix layer.

15. A method according to claim 8, **characterized in that** the interphase is made through the formation, on a ceramic matrix layer, of nodules forming the discrete contact pads of the second phase, and the deposition of a layer of a material making up the first phase.
